# EUROPÄISCHE PATENTSCHRIFT

(11) **EP 4 568 891 B1**
(45) Veröffentlichungstag und Bekanntmachung des Hinweises auf die Patenterteilung: **13.05.2026**
(21) Anmeldenummer: 23801794.1
(22) Anmeldetag: 08.11.2023
(51) Int. Cl.: B64D 11/06

(54) **FLUGGASTZSITZ**
AIRCRAFT PASSENGER SEAT
SIÈGE PASSAGER D'AÉRONEF

(30) Priorität: 08.11.2022 DE 102022129531
(43) Veröffentlichungstag der Anmeldung: 18.06.2025
(73) Patentinhaber: ZIM Aircraft Seating GmbH, 88090 Immenstaad am Bodensee (DE)
(72) Erfinder: BOPP, Metin Albert, 88069 Tettnang (DE); ALTUNBAS, Alper, 88690 Uhldingen-Mühlhofen (DE)
(74) Vertreter: RavensPAT Patentanwälte Partnerschaft mbB
(86) Internationale Anmeldenummer: PCT/EP2023/081110
(87) Internationale Veröffentlichungsnummer: WO 2024/100096

(56) Entgegenhaltungen:
- EP-A1- 3 882 151
- DE-A1- 102005 015 143
- DE-U1- 202011 002 719
- GB-A- 2 569 289

## Beschreibung

### Stand der Technik

Zur Ausstattung von Passagierflugzeugen, insbesondere von Langstreckenflugzeugen sind Fluggastsitze mit einem oder mehreren Sitzplätzen in einer Vielzahl von Ausführungen bekannt.

Ein Sitzplatz weist einen Sitzboden und eine Rückenlehne auf, wobei an einem Sitzplatz eines Fluggastsitzes nahezu immer verschiedene Sitzpositionen durch Lageänderungen des Sitzbodens, der Rückenlehne und häufig beider Teile einstellbar sind.

Dadurch können Passagiere zwischen aktiveren Sitzhaltungen in einer "upright position", z.B. für einen Verzehr von Mahlzeiten oder für den Start und die Landung, und passiveren Sitzhaltungen in einer "reclined position", z.B. zum Entspannen und Schlafen, nach Belieben wechseln.

Insbesondere sind verschiedene Lösungen zur Bewegung der Rückenlehne bekannt. Durch eine Bewegung der Rückenlehne lassen sich Sitzeinstellungen vorgeben, die beispielsweise den Bewegungsraum, den sogenannten "living space" benachbarter Fluggäste, insbesondere in einer dahinter angeordneten Sitzreihe, möglichst wenig beeinträchtigen.

Die DE 10 2005 015 143 A1 offenbart einen Sitz, insbesondere Fluggastsitz, mit Sitzkomponenten wie einem Sitzteil und einer Rückenlehne, sowie mit mindestens einem Bespannteil, das in mindestens einer Richtung und zumindest abschnittsweise eine Vorspannung aufweist und sich zwischen Rahmenteilen einer zuordenbaren Sitzkomponente erstreckt. Dadurch, dass mindestens eine ansteuerbare Einstelleinrichtung vorhanden ist, die in einem vorgebbaren Bereich und reversibel die Vorgabe verschiedener Vorspannungen für das jeweilige Bespannteil ermöglicht, kann der jeweils einsitzende Sitzbenutzer den Sitz individuell an seine Komfort- und Gesundheitsbedürfnisse anpassen.

Aufgrund der Anforderung im Luftverkehr, Sitzeinrichtungen möglichst leicht auszuführen und den verfügbaren "living space" eines Nutzers bestmöglich auszureizen, stellt die Konstruktion von bequem einstellbaren, vergleichsweise leichten, vergleichsweise günstigen und zugleich stabilen Fluggastsitzen eine besondere Herausforderung dar.

### Aufgabe und Vorteile der Erfindung

Aufgabe der vorliegenden Erfindung ist es, einen verbesserten Fluggastsitz bereitzustellen. Insbesondere einen Fluggastsitz bereitzustellen, welcher eine verbesserte Komfortfunktion aufweist. Insbesondere einen Fluggastsitz bereitzustellen, welcher eine verbesserte Beinfreiheit oder einen verbesserten "living space" für einen hinter dem Fluggastsitz sitzenden Nutzer aufweist.

Diese Aufgabe wird durch einen Fluggastsitz mit den Merkmalen des Anspruchs 1 gelöst.

Weitere mögliche Ausführungsformen der Erfindung sind in den Unteransprüchen aufgeführt.

Die Erfindung geht von einem Fluggastsitz aus, wobei der Fluggastsitz ein Gestell, ein Sitzflächenelement und ein Rückenlehnenelement aufweist.

Im Folgenden genannte Richtungsbezüge sind vorteilhafterweise auf die Sitzrichtung des Fluggastsitz bezogen. Beispielsweise ist die Sitzrichtung des Fluggastsitz im angeordneten Zustand des Fluggastsitzes im Flugzeug auch die Flugrichtung des Flugzeugs.

Beispielsweise ist das Gestell zur Befestigung im Bodenbereich an einer Fluggastkabine vorgesehen. Zum Beispiel weist das Gestell einen Sitzteiler und quer zur Sitzrichtung verlaufende Streben auf, wobei der Sitzteiler durch die Streben gehalten ist. Beispielsweise weist das Gestell zwei Sitzteiler auf. Denkbar ist, dass die beiden Sitzteiler mittels einer Strebe miteinander verbunden sind. Vorstellbar ist auch, dass die Sitzteiler zur Befestigung des Fluggastsitzes im Bodenbereich der Fluggastkabine vorgesehen sind. Das Gestell umfasst beispielsweise eine insbesondere feste Umhausung des Rückenlehnenelements. Die Umhausung ist beispielsweise als eine Rückenlehnenschale ausgebildet. Durch die Rückenlehnenschale ist beispielsweise eine Ausdehnung des Fluggastsitzes, beispielsweise entgegen einer Sitzrichtung, in einem rückwärtigen Bereich insbesondere unveränderlich festgelegt.

Beispielsweise ist das Sitzflächenelement dazu ausgebildet, eine Sitzfläche für einen Nutzer bereitzustellen und das Rückenlehnenelement eine Anlehnfläche für einen Rücken des Nutzers des Fluggastsitz. Beispielsweise ist das Sitzflächenelement als eine Sitzschale oder als ein Sitzkissen ausgebildet.

Zum Beispiel weist der Fluggastsitz eine Rückenlehne auf. Denkbar ist, dass die Rückenlehne das Rückenlehnenelement und eine Rückenlehnenschale aufweist. Beispielsweise weist das Rückenlehnenelement einen Rahmen auf.

Der Kern der Erfindung wird darin gesehen, dass das Rückenlehnenelement einen ersten Holm und einen zweiten Holm aufweist, wobei das Rückenlehnenelement ein elastisches Element aufweist, wobei das elastische Element sich vom ersten zum zweiten Holm erstreckt, sodass das elastische Element eine Anlehnfläche für einen Rücken eines Nutzers des Fluggastsitzes bildet, wobei die Elastizität des elastischen Elements einstellbar vorhanden ist. Hierdurch ist eine Rückenverlagerung eines Nutzers des Fluggastsitzes realisierbar, wodurch dem Nutzer ein entspannteres Sitzen ermöglicht ist. Beispielsweise ist hierdurch die Beinfreiheit eines Nutzers, welcher in einem weiteren Fluggastsitz sitzt, welcher hinter dem Fluggastsitz angeordnet ist, unveränderlich erhalten.

Beispielsweise wird unter dem elastischen Element verstanden, dass das elastische Element die Eigenschaft aufweist, unter Krafteinwirkung, z.B. durch den Nutzer, seine Form zu verändern und bei Wegfall der einwirkenden Kraft in die Ursprungsform zurückzukehren. Beispielsweise wird durch die Einstellung des elastischen Elements das elastische Element verformt. Beispielsweise ändert sich durch Verformung des elastischen Elements eine Kraft des elastischen Elements, welche einer Einwirkung des Nutzers auf das elastische Element entgegenwirkt. Beispielsweise wirkt das elastische Element mit einer Kraft Fe einer Anlehnkraft des Nutzers, z.B. aufgrund seines Gewichts, entgegen. Vorstellbar ist, dass die Kraft Fe des elastischen Elements abhängig von einem Formzustand des elastischen Elements ist. Beispielsweise ist eine Kraft Fe in der Ursprungsform des elastischen Elements kleiner als eine Kraft Fe in einem verformten Zustand des elastischen Elements. Vorstellbar ist auch, dass die Kraft Fe des elastischen Elements einstellbar ist.

Denkbar ist, dass die Elastizität des elastischen Elements einstellbar vorhanden ist. Zum Beispiel ist hierdurch ein Anlehnverhalten des elastischen Elements einstellbar. Beispielsweise ist die Einstellbarkeit des elastischen Elements dadurch realisiert, dass eine Form des elastischen Elements einstellbar vorhanden ist. Beispielsweise nimmt das elastische Element in der Ursprungsform eine Form für die "reclined position" des Fluggastsitzes ein. Vorstellbar ist, dass das elastische Element im eingestellten, z.B. verformten, Zustand die "upright position" definiert. Beispielsweise können Passagiere zwischen einer aktiveren Sitzhaltung des Fluggastsitz, einer "upright position", z.B. für einen Verzehr von Mahlzeiten oder für den Start und die Landung, und einer passiveren Sitzhaltung in einer "reclined position", z.B. zum Entspannen und Schlafen, nach Belieben wechseln. Beispielsweise ist die Elastizität eines elastischen Elements in der Ursprungsform größer als im eingestellen Zustand. Beispielsweise ist ein elastisches Element in der Ursprungsform elastischer als im eingestellten Zustand.

Vorstellbar ist auch, dass der Fluggastsitz derart ausgebildet ist, dass ein Nutzer sich unmittelbar oder mittelbar an der Anlehnfläche des elastischen Elements anlehnen kann. Denkbar ist auch, dass das Rückenlehnenelement einen Bezug aufweist, welcher das elastische Element überdeckt. Beispielsweise ist der Bezug zwischen dem elastischen Element und dem Nutzer angeordnet.

Auch wird vorgeschlagen, dass das Rückenlehnenelement mehrere elastische Elemente aufweist. Hierdurch ist der Fluggastsitz ergonomisch auf den Rücken eines Nutzers anpassbar ausgebildet.

Beispielsweise sind die elastischen Elemente alle aus dem gleichen Material hergestellt. Beispielsweise sind die elastischen Elemente identisch ausgebildet. Denkbar ist, dass die elastischen Elemente aus unterschiedlichen Materialien ausgebildet sind. Beispielsweise ist eine Elastizität eines ersten elastischen Element verschieden zu einer Elastizität eines weiteren, z.B. zweiten, elastischen Elements. Denkbar ist, dass eine Elastizität des ersten und des zweiten elastischen Elements in der Ursprungsform des ersten und des zweiten elastischen Elements verschieden ist. Vorstellbar ist auch, dass ein elastisches Element in der Außenform verschieden ist zu einem weiteren elastischen Element. Beispielsweise weist ein elastisches Element eine Größe, z.B. Länge und/oder Dicke, auf, welche verschieden ist, zu einer Größe eines weiteren elastischen Elements.

Beispielsweise weist der Fluggastsitz zwischen 2 und 50 oder zwischen 2 und 20 elastische Elemente auf. Denkbar ist, dass der Fluggastsitz zwischen 3 und 15 elastische Elemente aufweist. Beispielsweise weist der Fluggastsitz 2, 3, 4, 6, 7, 8, 9, 10, 11 oder 5 elastische Elemente auf.

Weiter wird vorgeschlagen, dass der erste Holm und der zweite Holm durch eine erste Querstrebe und eine zweite Querstrebe miteinander verbunden sind, sodass die Holme und die Querstreben einen Rahmen bilden. Hierdurch ist eine Stabilität des Fluggastsitz vergleichsweise verbessert.

Beispielsweise bilden der erste Holm, der zweite Holm, die erste Querstrebe und die zweite Querstrebe den Rahmen. Vorstellbar ist, dass der Rahmen mit dem Gestell verbunden ist. Denkbar ist, dass der Rahmen als ein formstabiles Element ausgebildet ist. Beispielsweise ist der erste Holm, der zweite Holm, die erste Querstrebe und/oder die zweite Querstrebe als ein Rohr oder als ein Vierkantrohr ausgebildet. Beispielsweise sind der erste Holm, der zweite Holm, die erste Querstrebe und/oder die zweite Querstrebe unlösbar miteinander verbunden, z.B. miteinander verschweißt oder verklebt. Zum Beispiel ist der erste Holm, der zweite Holm, die erste Querstrebe und/oder die zweite Querstrebe aus Aluminium, Titan und/oder einer Aluminiumlegierung ausgebildet.

Ebenfalls wird vorgeschlagen, dass die Elastizität eines ersten der mehreren elastischen Elemente einstellbar vorhanden ist, wobei die Elastizität eines zweiten der mehreren elastischen Elemente unveränderlich vorhanden ist. Hierdurch ist eine Ergonomie des Fluggastsitz vergleichsweise einfach einstellbar.

Zum Beispiel ist die Elastizität eines ersten der mehreren elastischen Elemente in der Ursprungsform des ersten elastischen Elements einstellbar vorhanden. Denkbar ist, dass die Ursprungsform des ersten elastischen Elements einstellbar vorhanden ist. Vorstellbar ist, dass die Ursprungsform des zweiten elastischen Elements unveränderlich vorhanden ist. Beispielsweise ist die Elastizität des zweiten elastischen Elements aufgrund einer Krafteinwirkung durch einen Nutzer veränderbar. Beispielsweise sind zwei oder mehr der mehreren elastischen Elemente einstellbar vorhanden. Vorstellbar ist auch, dass zwei oder mehr der mehreren elastischen Elemente unveränderlich vorhanden sind. Beispielsweise ist eine Ursprungsform von zwei oder mehr der mehreren elastischen Elemente unveränderlich vorhanden.

Beispielsweise sind 2, 3, 4, 5 oder 6 der mehreren elastischen Elemente einstellbar vorhanden.

Außerdem ist das elastische Element als ein dehnbarer Gurt oder als ein dehnbares Band ausgebildet. Hierdurch ist der Fluggastsitz vergleichsweise kostengünstig ausbildbar.

Beispielsweise ist das elastische Element als ein dehnbares Gummiband vorhanden. Vorstellbar ist, dass das elastische Element aus Stoff und/oder Kunststoff hergestellt ist. Beispielsweise weist das elastische Element ein Gewebe, z.B. ein elastisches Gewebe, auf.

Zum Beispiel weist das elastische Element die Form eines Bands oder eines Gurts auf. Denkbar ist, dass eine Länge des elastischen Elements zwei, drei, vier oder fünf mal größer ist, als eine Breite des elastischen Elements. Beispielsweise ist eine Dicke des elastischen Elements in einem Bereich zwischen 0,05mm und 20mm. Beispielsweise ist eine Breite des elastischen Elements in einem Bereich zwischen 4mm und 350mm, z.B. zwischen 5mm und 300mm. Denkbar ist, dass das elastische Element eine Länge zwischen 300mm und 700mm aufweist. Vorstellbar ist auch, dass das elastische Element zwischen 350mm und 650mm lang ist.

Auch wird vorgeschlagen, dass das Rückenlehnenelement, insbesondere der erste und der zweite Holm, relativ zum Gestell positionsunveränderlich vorhanden ist. Hierdurch ist eine Stabilität des Fluggastsitz vergleichsweise erhöht. Auch ist hierdurch ein "living space" für einen hinter dem Fluggastsitz sitzenden Nutzer unveränderlich gewährleistbar. Z.B. ist hierdurch eine Rückenlehne in Form einer "fixed shell" realisierbar.

Beispielsweise ist der Rahmen unbeweglich, starr und/oder positionsfest zum Gestell vorhanden und/oder mit dem Gestell verbunden. Beispielsweise ist der erste Holm, der zweite Holm und/oder die erste Querstrebe unbeweglich, starr und/oder positionsfest zum Gestell vorhanden und/oder mit dem Gestell verbunden.

Beispielsweise ist der erste Holm, der zweite Holm und/oder die erste Querstrebe unlösbar mit dem Gestell verbunden, z.B. mit dem Gestell verschweißt oder verklebt. Beispielsweise ist der erste und/oder der zweite Holm am Gestell integral ausgebildet, z.B. einstückig mit dem Gestell. Beispielsweise umgreift die Rückenlehnenschale das Rückenlehnenelement zumindest abschnittsweise. Denkbar ist, dass die Rückenlehnenschale einen hinteren Bereich des Rückenlehnenelements zumindest abschnittsweise überdeckt.

Außerdem ist ein elastisches Element den ersten und den zweiten Holm umlaufend am Rückenlehnenelement angeordnet, wobei ein erstes und ein zweites Ende des elastischen Elements aufeinander zubewegbar und voneinander wegbewegbar vorhanden sind. Hierdurch ist eine Einstellbarkeit des elastischen Elements vergleichsweise einfach realisierbar.

Beispielsweise erstreckt sich ein elastisches Element entlang seiner Längsachse vom ersten Holm zum zweiten Holm. Beispielsweise umgreift ein elastisches Element an einem ersten Ende des elastischen Elements den ersten Holm. Denkbar ist, dass ein elastisches Element an einem zweiten Ende des elastischen Elements den zweiten Holm umgreift. Denkbar ist, dass jedes elastische Element den ersten und den zweiten Holm umgreift.

Vorstellbar ist auch, dass ein elastisches Elements sich entlang seiner Längsachse zwischen dem ersten und dem zweiten Holm erstreckt. Beispielsweise ist eine Länge des elastischen Elements kleiner, gleich oder größer als ein Abstand des ersten Holms zum zweiten Holm. Vorstellbar ist, dass der erste und der zweite Holm eine Breite des Rückenlehnenelements und/oder eine Breite der Rückenlehne vorgeben.

Beispielsweise erstreckt sich das elastische Element über einen Großteil seiner Längserstreckung entlang einer Vorderseite des Rückenlehnenelements und umgreift den ersten und/oder zweiten Holm mit seinem Ende, wobei das erste und/oder das zweite Ende des elastischen Elements sich entlang einer Rückseite des Rückenlehnenelements erstreckt, sodass das erste und/oder das zweite Ende des elastischen Elements über die Dicke des Holms vom Großteil des elastischen Elements beabstandet vorhanden ist. Beispielsweise bildet die Vorderseite des Rückenlehnenelements die Seite, an welche ein Nutzer des Fluggastsitz sich anlehnen kann.

Beispielsweise sind mehrere elastische Elemente entlang einer Längsachse des ersten Holms und/oder einer Längsachse des zweiten Holms nebeneinander positioniert am Rückenlehnenelement angeordnet. Zum Beispiel ist eine Längserstreckung eines elastischen Elements quer zur Längsachse des ersten Holms und/oder quer zur Längsachse des zweiten Holms ausgerichtet. Beispielsweise erstreckt sich ein elastisches Element in seiner Breitenerstreckung entlang der Längsachse des ersten Holms und/oder entlang der Längsachse des zweiten Holms.

Denkbar ist, dass ein elastisches Element an seinem ersten Ende mit dem ersten Holm verbunden ist und an seinem zweiten Ende mit dem zweiten Holm verbunden ist. Vorstellbar ist, dass ein elastisches Element an seinem ersten Ende fest mit dem ersten Holm und/oder an seinem zweiten Ende fest mit dem zweiten Holm verbunden ist. Zum Beispiel ist ein elastisches Element, welches mit dem ersten und dem zweiten Holm verbunden ist, unveränderlich ausgebildet. Beispielsweise ist ein elastisches Element mit seinem ersten Ende fest mit dem ersten Holm verbunden und mit seinem zweiten Ende den zweiten Holm umgreifend angeordnet.

Außerdem ist eine Zugvorrichtung vorhanden, wobei das erste und das zweite Ende des elastischen Elements mit einem Zugelement der Zugvorrichtung verbunden sind, wobei am Zugelement ein Einstellelement der Zugvorrichtung angreift, wobei durch das Einstellelement das Zugelement in einer Richtung entlang einer Längsachse des ersten Holms oder des zweiten Holms bewegbar ist, sodass bei einer Bewegung des Zugelements eine Einstellung der Elastizität des elastischen Elements erfolgt. Hierdurch ist eine vergleichsweise einfache Einstellbarkeit des elastischen Elements realisierbar. Hierdurch ist z.B. eine Länge des elastischen Elements einstellbar.

Beispielsweise weist der Fluggastsitz eine Zugvorrichtung auf. Denkbar ist, dass die Zugvorrichtung ein Zugelement und ein Einstellelement aufweist. Beispielsweise greift an einem ersten Ende eines elastischen Elements ein Verbindungselement der Zugvorrichtung mit seinem ersten Ende an, wobei das Verbindungselement mit seinem zweiten Ende mit dem Zugelement verbunden ist. Beispielsweise greift an einem zweiten Ende des elastischen Elements ein weiteres Verbindungselement der Zugvorrichtung mit seinem ersten Ende an, wobei das weitere Verbindungselement mit seinem zweiten Ende mit dem Zugelement verbunden ist. Denkbar ist, dass mehrere elastische Elemente mit dem Zugelement verbunden sind, z.B. mittels Verbindungselementen.

Beispielsweise ist das Zugelement als ein Ring oder als eine Öse ausgebildet. Vorstellbar ist auch, dass das Zugelement als ein Stab ausgebildet ist. Beispielsweise ist das Zugelement beweglich am Rückenlehnenelement gelagert. Beispielsweise ist der Stab an seinen Enden beweglich am Rückenlehnenelement gelagert. Denkbar ist, dass jedes Verbindungselement am Zugelement angeordnet ist. Zum Beispiel ist jedes Verbindungselement am Zugelement befestigt.

Vorstellbar ist auch, dass ein Umlenkelement vorhanden ist. Beispielsweise ist das Umlenkelement als eine Rolle vorhanden. Denkbar ist, dass über das Umlenkelement ein Verbindungselement verläuft und durch das Umlenkelement umgelenkt wird. Beispielsweise ist das Umlenkelement am ersten Holm oder am Rahmen angeordnet, z.B. befestigt. Vorstellbar ist, dass mehrere Umlenkelemente vorhanden sind. Beispielsweise sind je elastischem Element zwei Umlenkelemente vorhanden. Zum Beispiel sind je einstellbarem elastischem Element zwei Verbindungselemente vorhanden. Beispielsweise ist das Umlenkelement derart am Fluggastsitz angeordnet, dass ein Verbindungselement eine Kraft in Richtung der Längserstreckung des elastischen Elements ausüben kann. Denkbar ist, dass das Verbindungselement eine Kraft ausschließlich in Richtung der Längserstreckung des elastischen Elements oder parallel zur Längserstreckung des elastischen Elements auf das elastische Element ausüben kann.

Ebenfalls wird vorgeschlagen, dass der Fluggastsitz eine Welle aufweist, wobei das Einstellelement mit der Welle verbunden ist, wobei bei einer Drehbewegung der Welle das Einstellelement auf die Welle aufgewickelt oder abgewickelt wird, wobei durch den Wickelvorgang des Einstellements eine Position des Zugelements verändert wird. Hierdurch ist eine vergleichsweise einfache Einstellbarkeit realisiert. Beispielsweise ist hierdurch die Einstellung des Rückenlehnenelements mit einer Einstellung des Sitzflächenelements koppelbar.

Beispielsweise ist die Welle mit dem Sitzflächenelement gekoppelt, sodass durch eine Drehbewegung der Welle, sowohl eine Eigenschaft des Sitzflächenelements, als auch eine Eigenschaft des Rückenlehnenelements verändert wird. Beispielsweise ist die Welle als eine Wickelwelle ausgebildet.

Denkbar ist, dass das Einstellelement als ein Seil oder als ein Draht ausgebildet ist. Beispielsweise ist das Einstellelement als ein Seilzug oder als ein Drahtseil vorhanden. Beispielsweise ist das Einstellelement mit einem ersten Ende mit dem Zugelement verbunden und mit einem zweiten Ende mit der Welle. Beispielsweise ist das Einstellelement derart vorhanden, dass das Einstellelement eine Zugkraft auf das Zugelement ausüben kann, beispielsweise bewirkt durch eine Drehung der Welle. Vorstellbar ist, dass eine Zugrichtung der Zugkraft des Einstellelements auf das Zugelement quer zu einer Längserstreckung eines elastischen Elements ausgerichtet ist. Denkbar ist auch, dass die Zugrichtung der Zugkraft des Einstellelements in Richtung oder parallel zur Längserstreckung des ersten Holms oder des zweiten Holms ausgerichtet ist.

Eine beispielhafte Ausgestaltung der Erfindung ist eine Sitzreihe mit einem Fluggastsitz nach einer der vorhergehenden Ausführungsformen.

Eine weiter beispielhafte Ausgestaltung der Erfindung ist ein Flugzeug mit einem Fluggastsitz nach einer der vorhergehend genannten Ausführungen oder eine Sitzreihe nach einer der vorgenannten Ausführungsformen.

### Figurenbeschreibung

Weitere Merkmale und Vorteile der Erfindung sind anhand schematisch gezeigter Ausführungsbeispiele näher erläutert. Im Einzelnen zeigt:
- Figur 1: eine perspektivische Ansicht von schräg seitlich vorne auf eine Sitzreihe mit Fluggastsitzen,
- Figur 2: ein Rückenlehnenelement eines Fluggastsitz in einer perspektivischen Ansicht von schräg seitlich vorne,
- Figur 3: das Rückenlehnenelement gemäß Figur 2 in einer weiteren perspektivischen Ansicht von schräg seitlich vorne und
- Figur 4: das Rückenlehnenelement gemäß Figur 2 in einer perspektivischen Ansicht von schräg seitlich hinten unten.

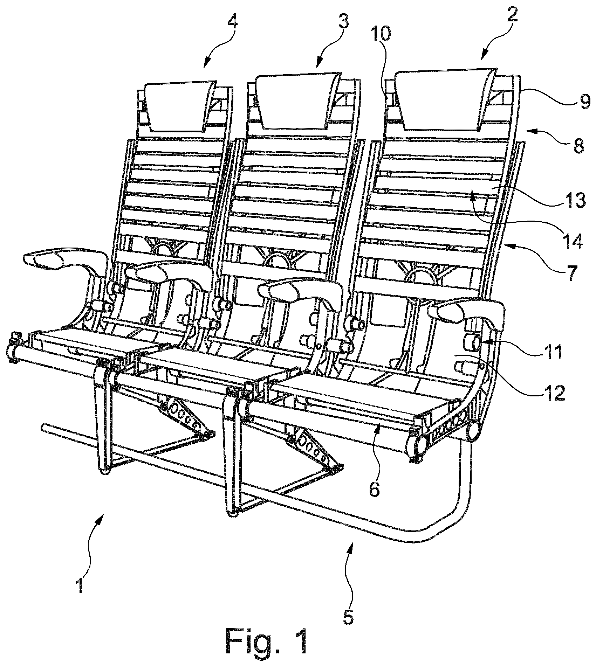

In Figur 1 ist eine Sitzreihe 1 mit Fluggastsitzen 2 bis 4 gezeigt. Beispielsweise weist die Sitzreihe 1 ein Fluggastsitz 2 mit einem Gestell 5 auf, an welchem ein Sitzflächenelement 6 und ein Rückenlehnenelement 7 des Fluggastsitz 2 angeordnet ist.

Beispielsweise weist das Rückenlehnenelement 7 einen Rahmen 8 auf. Zum Beispiel weist der Rahmen 8 einen ersten Holm 9 und einen zweiten Holm 10 auf. Beispielsweise sind der erste Holm 9 und der zweite Holm 10 am Gestell 5 an einem Gelenk 11 beweglich angeordnet. Beispielsweise ist eine Rückenlehnenschale 12 vorhanden, welche das Rückenlehnenelement 7 an einer rückwärtigen Seite des Fluggastsitz 2 begrenzt.

Das Rückenlehnenelement 7 weist ein elastische Element in Form eines Bands 13 auf. Denkbar ist, dass das Rückenlehnenelement 7 mehrere elastische Elemente 13 aufweist. Beispielweise weist das Band 13 eine Anlehnfläche 14 auf, an welche sich ein Nutzer des Fluggastsitz 2 mit seinem Rücken anlehnen kann.

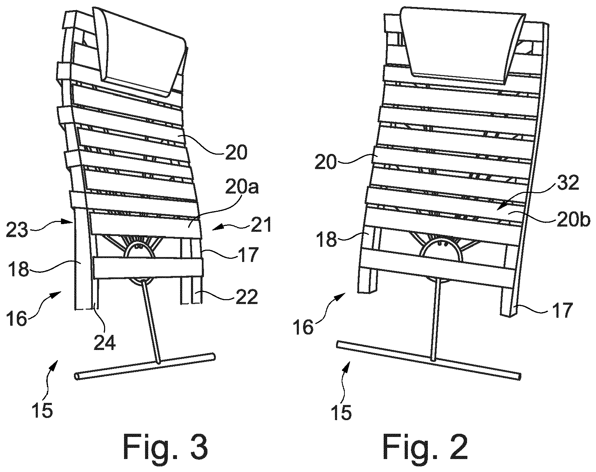

In den Figuren 2 bis 4 ist ein weiteres Rückenlehnenelement 15 gezeigt. Beispielsweise weist das Rückenlehnenelement 15 einen Rahmen 16 auf. Zum Beispiel weist der Rahmen 16 einen ersten und einen zweiten Holm 17, 18 auf. Denkbar ist, dass der erste und der zweite Holm 17, 18 mittels einer Querstrebe 19 verbunden ist.

Beispielsweise weist das Rückenlehnenelement 15 mehrere elastische Elemente in Form von Bändern 20 auf. Denkbar ist, dass ein erstes Band 20a mit einem ersten Ende 21 an einer Vorderseite 22 des ersten Holms 17 befestigt ist und mit einem zweiten Ende 23 an einer Vorderseite 24 des zweiten Holms 18. Weiter vorstellbar ist, dass ein zweites Band 20b mit einem ersten Ende 25 den ersten Holm 17 umgreift und mit einem zweiten Ende 26 den zweiten Holm 18.

Beispielsweise weist das Rückenlehnenelement 15 eine Zugvorrichtung 27 auf. Denkbar ist, dass die Zugvorrichtung 27 ein Zugelement 28 und ein Einstellelement 29 aufweist. Denkbar ist, dass das Zugelement 28 als ein Ring ausgebildet ist. Beispielsweise ist das Einstellelement 29 in Form eines Zugseils ausgebildet. Ebenfalls vorstellbar ist, dass das Einstellelement 29 an einem Ende 30 mit einer Welle 31 verbunden ist. Zum Beispiel ist das Einstellelement 29 auf die Welle 31 aufwickelbar und abwickelbar vorhanden.

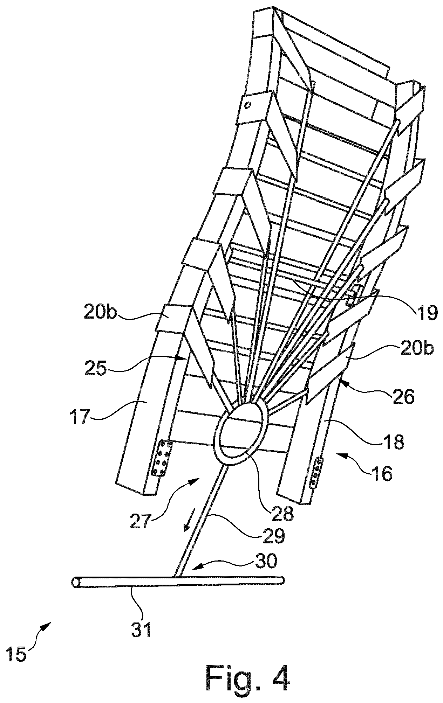

Beispielsweise sind das erste und das zweite Ende 25, 26 des zweiten Bands 20b mit dem Zugelement 28 verbunden. Denkbar ist, dass mehrere elastische Elemente mit dem Zugelement 28 verbunden sind. Hierdurch ist durch eine Bewegung des Zugelements 28 eine Elastizität des elastischen Elements im Bereich der Anlehnfläche 32 justierbar. Beispielweise wird durch ein Aufwickeln des Einstellelements 29 auf die Welle 31 das Zugelement 28 nach unten bewegt (siehe Figur 4) wodurch eine Zugkraft auf die Enden 25, 26 des zweiten Bands 20b ausgeübt wird.

### Bezugszeichenliste

| | | | |
|---|---|---|---|
| 1 | Sitzreihe | 18 | Holm |
| 2 | Fluggastsitz | 19 | Querstrebe |
| 3 | Fluggastsitz | 20 | Band |
| 4 | Fluggastsitz | 20a | Band |
| 5 | Gestell | 20b | Band |
| 6 | Sitzflächenelement | 21 | Ende |
| 7 | Rückenlehnenelement | 22 | Vorderseite |
| 8 | Rahmen | 23 | Ende |
| 9 | Holm | 24 | Vorderseite |
| 10 | Holm | 25 | Ende |
| 11 | Gelenk | 26 | Ende |
| 12 | Rückenlehnenschale | 27 | Zugvorrichtung |
| 13 | Band | 28 | Zugelement |
| 14 | Anlehnfläche | 29 | Einstellelement |
| 15 | Rückenlehnenelement | 30 | Ende |
| 16 | Rahmen | 31 | Welle |
| 17 | Holm | 32 | Anlehnfläche |

## Patentansprüche

1. Fluggastsitz (2), wobei der Fluggastsitz (2) ein Gestell (5), ein Sitzflächenelement (6) und ein Rückenlehnenelement (7, 15) aufweist, wobei das Rückenlehnenelement (7, 15) einen ersten Holm (9) und einen zweiten Holm (10) aufweist, wobei das Rückenlehnenelement (7, 15) ein elastisches Element (20, 20a, 20b) aufweist, wobei das elastische Element (20, 20a, 20b) sich vom ersten zum zweiten Holm (9, 10) erstreckt, sodass das elastische Element (20, 20a, 20b) eine Anlehnfläche (14) für einen Rücken eines Nutzers des Fluggastsitzes (2) bildet, wobei die Elastizität des elastischen Elements (20, 20a, 20b) einstellbar vorhanden ist, wobei das elastische Element (20, 20a, 20b) als ein dehnbarer Gurt oder als ein dehnbares Band ausgebildet ist, wobei das elastische Element (20b) den ersten und den zweiten Holm (17, 18) umlaufend am Rückenlehnenelement (7, 15) angeordnet ist, wobei ein erstes und ein zweites Ende (25, 26) des elastischen Elements (20b) aufeinander zu und voneinander wegbewegbar vorhanden sind, wobei eine Zugvorrichtung (27) vorhanden ist, wobei das erste und das zweite Ende (25, 26) des elastischen Elements (20b) mit einem Zugelement (28) der Zugvorrichtung (27) verbunden sind, wobei am Zugelement (28) ein Einstellelement (29) der Zugvorrichtung (27) angreift, wobei durch das Einstellelement (29) das Zugelement (28) in einer Richtung entlang einer Längsachse des ersten oder des zweiten Holms bewegbar ist, sodass bei einer Bewegung des Zugelements (28) eine Einstellung der Elastizität des elastischen Elements (20b) erfolgt.

2. Fluggastsitz (2) nach dem vorhergehenden Anspruch 1, **dadurch gekennzeichnet, dass** das Rückenlehnenelement (7, 15) mehrere elastische Elemente (20, 20a, 20b) aufweist.

3. Fluggastsitz (2) nach einem der vorhergehenden Ansprüche, **dadurch gekennzeichnet, dass** der erste und der zweite Holm (17, 18) durch eine erste und eine zweite Querstrebe (19) miteinander verbunden sind, sodass die Holme (17, 18) und die Querstreben (19) einen Rahmen (16) bilden.

4. Fluggastsitz (2) nach Anspruch 2 oder nach Anspruch 3, wenn Anspruch 3 von Anspruch 2 abhängig ist, **dadurch gekennzeichnet, dass** die Elastizität eines ersten der mehreren elastischen Elemente (20, 20a, 20b) einstellbar vorhanden ist, wobei die Elastizität eines zweiten der mehreren elastischen Elemente unveränderlich vorhanden ist.

5. Fluggastsitz (2) nach einem der vorhergehenden Ansprüche, **dadurch gekennzeichnet, dass** das Rückenlehnenelement (7, 15) relativ zum Gestell (5) positionsunveränderlich vorhanden ist.

6. Fluggastsitz (2) nach einem der vorhergehenden Ansprüche, **dadurch gekennzeichnet, dass** das Zugelement (28) als ein Ring, als eine Öse oder als ein Stab ausgebildet ist.

7. Fluggastsitz (2) nach einem der vorhergehenden Ansprüche, **dadurch gekennzeichnet, dass** das Einstellelement (29) als ein Seil oder als ein Draht ausgebildet ist.

8. Fluggastsitz (2) nach einem der vorhergehenden Ansprüche, **dadurch gekennzeichnet, dass** der Fluggastsitz (2) eine Welle (31) aufweist, wobei das Einstellelement (29) mit der Welle (31) verbunden ist, wobei bei einer Drehbewegung der Welle (31) das Einstellelement (29) auf die Welle (31) aufgewickelt oder abgewickelt wird, wobei durch den Wickelvorgang des Einstellements (29) eine Position des Zugelements (28) verändert wird.

9. Sitzreihe (1) mit einem Fluggastsitz (2) nach einem der vorangegangenen Ansprüche.

10. Flugzeug mit einem Fluggastsitz (2) nach einem der Ansprüche 1 bis 8 oder einer Sitzreihe nach dem Anspruch 9.

## Claims

1. Aircraft passenger seat (2), wherein the aircraft passenger seat (2) has a base (5), a seating surface element (6) and a backrest element (7, 15), wherein the backrest element (7, 15) has a first beam (9) and a second beam (10), wherein the backrest element (7, 15) has an elastic element (20, 20a, 20b), wherein the elastic element (20, 20a, 20b) extends from the first to the second beam (9, 10), such that the elastic element (20, 20a, 20b) forms a support surface (14) for a back of a user of the aircraft passenger seat (2), wherein the elasticity of the elastic element (20, 20a, 20b) is adjustable, wherein the elastic element (20, 20a, 20b) is designed as a stretchable strap or as a stretchable band, wherein the elastic element (20b) is arranged on the backrest element (7, 15) so as to run around the first and the second beam (17, 18), wherein a first and a second end (25, 26) of the elastic element (20b) are movable towards one another and away from one another, wherein there is a tension device (27), wherein the first and the second end (25, 26) of the elastic element (20b) are connected to a tension element (28) of the tension device (27), wherein an adjusting element (29) of the tension device (27) engages on the tension element (28), wherein the tension element (28) can be moved in a direction along a longitudinal axis of the first or the second beam by the adjusting element (29), such that an adjustment of the elasticity of the elastic element (20b) takes place during a movement of the tension element (28).

2. Aircraft passenger seat (2) according to the preceding Claim 1, **characterized in that** the backrest element (7, 15) has a plurality of elastic elements (20, 20a, 20b).

3. Aircraft passenger seat (2) according to any one of the preceding claims, **characterized in that** the first and the second beam (17, 18) are connected to each other by a first and a second cross brace (19), such that the beams (17, 18) and the cross braces (19) form a frame (16).

4. Aircraft passenger seat (2) according to Claim 2 or according to Claim 3 if Claim 3 is dependent on Claim 2, **characterized in that** the elasticity of a first of the plurality of elastic elements (20, 20a, 20b) is adjustable, wherein the elasticity of a second of the plurality of elastic elements is invariable.

5. Aircraft passenger seat (2) according to any one of the preceding claims, **characterized in that** the position of the backrest element (7, 15) relative to the base (5) is invariable.

6. Aircraft passenger seat (2) according to any one of the preceding claims, **characterized in that** the tension element (28) is designed as a ring, as an eyelet or as a rod.

7. Aircraft passenger seat (2) according to any one of the preceding claims, **characterized in that** the adjusting element (29) is designed as a cable or as a wire.

8. Aircraft passenger seat (2) according to any one of the preceding claims, **characterized in that** the aircraft passenger seat (2) has a shaft (31), wherein the adjusting element (29) is connected to the shaft (31), wherein, during a rotational movement of the shaft (31), the adjusting element (29) is wound onto or off the shaft (31), wherein a position of the tension element (28) is changed by the winding process of the adjusting element (29).

9. Seat row (1) having an aircraft passenger seat (2) according to any one of the preceding claims.

10. Aircraft having an aircraft passenger seat (2) according to any one of Claims 1 to 8 or a seat row according to Claim 9.

## Revendications

1. Siège passager (2) d'aéronef, le siège passager (2) d'aéronef présentant un bâti (5), un élément d'assise (6) et un élément de dossier (7, 15), l'élément de dossier (7, 15) présentant un premier montant (9) et un deuxième montant (10), l'élément de dossier (7, 15) présentant un élément élastique (20, 20a, 20b), l'élément élastique (20, 20a, 20b) s'étendant du premier au deuxième montant (9, 10), de sorte que l'élément élastique (20, 20a, 20b) forme une surface d'appui (14) pour un dos d'un utilisateur du siège passager (2) d'aéronef, l'élasticité de l'élément élastique (20, 20a, 20b) se présentant sous forme réglable, l'élément élastique (20, 20a, 20b) étant réalisé sous la forme d'une sangle extensible ou d'une bande extensible, l'élément élastique (20b) étant disposé de manière à entourer le premier et le deuxième montant (17, 18) au niveau de l'élément de dossier (7, 15), une première et une deuxième extrémité (25, 26) de l'élément élastique (20b) se présentant de manière à pouvoir se déplacer l'une vers l'autre et l'une à l'écart de l'autre, un dispositif de traction (27) étant présent, la première et la deuxième extrémité (25, 26) de l'élément élastique (20b) étant reliées à un élément de traction (28) du dispositif de traction (27), un élément de réglage (29) du dispositif de traction (27) agissant sur l'élément de traction (28), l'élément de traction (28) pouvant être déplacé par l'élément de réglage (29) dans une direction le long d'un axe longitudinal du premier ou du deuxième montant, de sorte qu'un réglage de l'élasticité de l'élément élastique (20b) a lieu lors d'un déplacement de l'élément de traction (28).

2. Siège passager (2) d'aéronef selon la revendication précédente 1, **caractérisé en ce que** l'élément de dossier (7, 15) présente plusieurs éléments élastiques (20, 20a, 20b).

3. Siège passager (2) d'aéronef selon l'une des revendications précédentes, **caractérisé en ce que** le premier et le deuxième montant (17, 18) sont reliés l'un à l'autre par une première et une deuxième traverse (19), de sorte que les montants (17, 18) et les traverses (19) forment un cadre (16).

4. Siège passager (2) d'aéronef selon la revendication 2 ou selon la revendication 3, lorsque la revendication 3 dépend de la revendication 2, **caractérisé en ce que** l'élasticité d'un premier des plusieurs éléments élastiques (20, 20a, 20b) se présente sous forme réglable, l'élasticité d'un deuxième des plusieurs éléments élastiques se présentant sous forme invariable.

5. Siège passager (2) d'aéronef selon l'une des revendications précédentes, **caractérisé en ce que** l'élément de dossier (7, 15) se présente de manière positionnellement invariable par rapport au bâti (5).

6. Siège passager (2) d'aéronef selon l'une des revendications précédentes, **caractérisé en ce que** l'élément de traction (28) est réalisé sous la forme d'un anneau, d'un œillet ou d'une tige.

7. Siège passager (2) d'aéronef selon l'une des revendications précédentes, **caractérisé en ce que** l'élément de réglage (29) est réalisé sous la forme d'un câble ou d'un fil.

8. Siège passager (2) d'aéronef selon l'une des revendications précédentes, **caractérisé en ce que** le siège passager (2) d'aéronef présente un arbre (31), l'élément de réglage (29) étant relié à l'arbre (31) ; lors d'un mouvement de rotation de l'arbre (31), l'élément de réglage (29) étant enroulé sur l'arbre (31) ou déroulé de celui-ci, une position de l'élément de traction (28) étant modifiée par le processus d'enroulement de l'élément de réglage (29).

9. Rangée (1) de sièges avec un siège passager (2) d'aéronef selon l'une des revendications précédentes.

10. Aéronef avec un siège passager (2) d'aéronef selon l'une des revendications 1 à 8 ou une rangée de sièges selon la revendication 9.
